# EUROPEAN PATENT SPECIFICATION

(11) **EP 2 326 491 B1**
(45) Date of publication and mention of the grant of the patent: **25.04.2012**
(21) Application number: 08876022.8
(22) Date of filing: 11.08.2008
(51) Int. Cl.: B29D 30/30, B60C 1/00, B60C 9/18

(54) **Process for building a green tyre for vehicle wheels and tyre built by said process**
Verfahren zum Bau eines Reifenrohlings für Fahrzeugräder und durch das Verfahren gebauter Reifen
Procédé de construction d'un pneu vert pour roues de véhicule et pneu construit selon ledit procédé

(43) Date of publication of application: 01.06.2011
(73) Proprietor: PIRELLI TYRE S.p.A., 20126 Milano (IT)
(72) Inventor: MISANI, Pierangelo, I-20126 Milano (IT); NAHMIAS NANNI, Marco, I-20126 Milano (IT)
(74) Representative: Giannesi, Simona
(86) International application number: PCT/IT2008/000547
(87) International publication number: WO 2010/018603

(56) References cited:
- EP-A- 1 785 284
- WO-A-03/035378
- US-A1- 2002 157 753
- US-A1- 2008 006 359

## Description

The present invention relates to a process for building a green tyre for vehicle wheels according to the preamble of claim 1, to a process for producing a type for vehicle wheels and to a green type for vehicle wheels according to the preamble of claim 12. A process and a green type of this kind is known from e.g. EP-A-1 350 616 or EP-A- 1 555 113. Tyre production cycles comprise firstly the carrying out of a building process wherein the various components of the tyre itself are made and/or built in one or more building lines, and subsequently the carrying out of a moulding and vulcanization process in a suitable vulcanization line, suitable for defining the tyre structure according to desired tread geometry and design.

A tyre generally comprises a toroidally ring-shaped carcass including one or more carcass plies, strengthened with reinforcing cords lying in substantially radial planes (a radial plane contains the rotation axis of the tyre). Each carcass ply has its ends integrally associated with at least one metal reinforcing annular structure, known as bead core, constituting the reinforcing at the beads, i.e. at the radially inner ends of the tyre, having the function of enabling the assembling of the tyre with a corresponding mounting rim. Placed crown wise to said carcass is a band of elastomeric material, called tread band, within which, at the end of the moulding and vulcanization steps, a raised pattern is formed for ground contact. A reinforcing structure, generally known as belt structure, is arranged between the carcass and the tread band. Such structure usually comprises, in the case of tyres for cars, at least two radially overlapped strips of rubber fabric provided with reinforcing cords, usually of metal, arranged parallel to each other in each strip and crossed with the cords of the adjacent strip, preferably symmetrical to the equatorial plane of the tyre. Preferably, the belt structure further comprises in radially outer position, at least on the ends of the underlying belt strips, also a third layer of textile or metal cords, arranged circumferentially (at 0 degrees).

Finally, in tyres of the tubeless type, a radially inner layer, called liner, is present which has imperviousness features for ensuring the air-tightness of the tyre itself.

To the aims of the present invention and in the following claims, by the term "green elastomeric material" it is intended a composition comprising at least one vulcanizable polymer base and at least one reinforcing filler. Preferably, such composition further comprises additives such as cross-linking and/or plasticizing agents. By virtue of the cross-linking agents, such material may be cross-linked by heating, so as to form the final manufactured article.

Within the scope of the present description and in the following claims, parts by weight of a given component for each 100 parts by weight of the polymer base wherein said component is dispersed shall also be referred to by the term: phr.

Within the present scope, the term "green tyre" denotes a tyre obtained by the building process and not vulcanized yet.

In the present description and in the following claims, the term "strip-like element" indicates a ribbon-like element of elastomeric material cut to size, comprising at least two textile or metal reinforcing cords.

In the present description and following claims, the term "circumferentially contiguous strip-like elements" may be understood, combined or as an alternative, as strip-like elements side by side, strip-like elements welded one to the another, strip-like elements partially overlapped in circumferential direction.

WO 03/035378, US 2002/157753, EP 1785284 disclose tyres for vehicle wheels and processes for manufacturing the same. US 2008/006359 discloses a runflat tire.

WO 04/056585 describes a pneumatic tyre for vehicle wheels comprising a toroidal carcass with a central crown portion and two axially opposite sidewalls terminating with a pair of beads for anchoring the tyre to a corresponding mounting rim, each bead comprising at least one annular reinforcing core, a tread band placed crown wise, coaxially extending around said carcass and provided with a raised pattern for rolling contact with the ground, and a belt structure coaxially interposed between said carcass and tread band, said carcass comprising at least one carcass ply, the ends of said ply extending in a radially external direction not beyond half the radial height of said annular reinforcing elements, wherein said tyre comprises at least one reinforcing layer associated to said carcass, at a radially external position relative to a point of maximum axial thickness of said carcass and at a position axially external to said belt structure. Said reinforcing layer aims to reduce the tyre deformation in the impression area for reducing the strains at the beads.

EP 1 350 616 A1 describes a tyre structural member manufacturing method that provides for forming tyre structural members from a continuous narrow strip by means of small inexpensive equipment capable of being directly combined with a tyre structural member forming machine and the relevant manufacturing system that carries out such method.

EP 1 555 113 A1 which is considered the closest prior art, describes a method for forming a cord reinforcement layer for tyres and a cord reinforcement member-forming apparatus for carrying out the method that allow a flexible small-lot tyre production and provide tyres with high uniformity level, by coating the cords with rubber in advance and attaching the rubber-coated cords one

by one onto a tyre-forming drum in its circumferential direction.

The Applicant has verified that by the tyre production methods that provide for the use of strip-like element/cord elements, such as those described in EP 1 350 616 A1 and in EP 1 555 113 A1, the finished products obtained may exhibit faults. In fact, both in the case where the strip-like elements are simply side by side and in the case where they are welded or overlapped, during the tyre shaping a problem of irregularity occurs with the arrangement of the reinforcing cords present in such strip-like elements.

In other words, during the shaping, that causes the radial expansion of the carcass ply, thinning out is created between the strip-like elements or within the same strip-like elements that make up the ply, which may cause problems of structural integrity on the finished product.

The Applicant believes that such irregularities are formed during the vulcanizing and moulding step due to the fact that the elastomeric material of the liner and/or of the under-liner is capable of penetrating in the possible thinned out areas created between the strip-like elements or therein during the shaping step.

Such problem occurs with particular criticality in the area comprised between the axially outer edges of the belt structure and the axially outermost portions of the carcass ply, due to the lack of radially outer belts that restrain the above described phenomenon. It is the object of the invention to solve this problem. The Applicant has perceived that in order to produce finished tyres wherein such discontinuities are substantially eliminated, it is necessary to build a green tyre in such a way as to prevent the above penetration of the elastomeric material from the radially innermost layers inside the carcass ply made in strip-like elements, operating since the first steps of the green tyre building operations, that is, prior to the steps of shaping, moulding and vulcanizing the same.

Finally, the Applicant has found that by building a constraining layer in a radially inner position relative to the belt structure, said layer exhibiting suitable mechanical features of tensile strength when green, it is possible to make a barrier also in the green tyre being processed between the components of the tyre of elastomeric material and the strip-like elements that make up the carcass ply/plies, so as to prevent the penetration of different elastomeric materials between the strip-like elements themselves during the shaping step of the tyre itself, thereby preventing discontinuities on the finished product at the end of the moulding and vulcanizing steps.

According to a first aspect thereof, the invention relates to a process for building a green tyre for vehicle wheels comprising the steps of:
a) building a carcass structure of a green tyre on a forming drum, said carcass structure comprising at least one carcass ply and a pair of annular anchoring structures, said at least one carcass ply being built by laying circumferentially contiguous strip-like elements;
b) toroidally shaping said carcass structure for associating it to a crown structure comprising at least one belt structure;
wherein the step a) of building comprises at least one step a1) of applying a constraining layer of a green elastomeric material reinforced with fibres circumferentially oriented said green elastomeric material reinforced with oriented fibres exhibiting at 20% of elongation in a direction parallel, to the direction of orientation of the above fibres; a strain level higher than equal to 0.20 MPa measured according to ISO 9026 and ISO 37 standards by a specimen classified as "type 2" in said ISO 37 standard.

The Applicant believes that such barrier further serves as "belt-like" element for the carcass ply without generating thinning out between the cords of said ply even in the presence of strip-like elements making up the same carcass ply, since such belt-like element is capable of keeping, in the subsequent steps of shaping and moulding, a substantially regular density of the cords in the carcass ply.

In this way it is possible to prevent the penetration of the elastomeric material of the radially innermost layers of the tyre being processed and the thinning out of the strip-like elements making up the carcass ply of the tyre itself starting from the shaping step.

The Applicant has further checked that by building a green tyre provided with a carcass ply with strip-like elements, with a constraining layer having such mechanical features as to prevent that in the subsequent steps of shaping, vulcanizing and moulding, the mixtures of the radially innermost layers penetrate into the outermost layers, it is possible to obtain a finished product free from the structural irregularities mentioned above.

More precisely, according to a second aspect thereof, the invention relates to a green tyre for vehicle wheels comprising:
- a carcass structure comprising at least one carcass ply including a plurality of circumferentially contiguous strip-like elements and a pair of annular anchoring structures;
- a crown structure comprising at least one belt structure and a tread band; and
- at least one constraining layer of a green elastomeric material reinforced with fibres circumferentially oriented in radially inner position relative to said belt structure, said green elastomeric material reinforced with fibres exhibiting at 20% of elongation in a direction parallel to the direction of orientation of the above fibres, a strain level higher than equal to 0.20 MPa measured according to ISO 9026 and ISO 37 standards by a specimen classified as "type 2" in said ISO 37 standard.

According to a third aspect thereof, the present invention relates to a process for producing a tyre for vehicle wheels according to claim 11. Particular embodiments of the invention are the subject of the respective dependent claims. A tyre for vehicle wheels can be obtained by moulding and vulcanizing the above green tyre.

The present invention, in at least one of the above aspects thereof, can exhibit at least one of the following preferred features.

In a particularly preferred embodiment, the process for building the green tyre provides for the forming drum to be substantially cylindrical.

Preferably, said step b) of shaping is carried out by radial expansion of the forming drum.

According to a preferred embodiment, said green elastomeric material reinforced with oriented fibres exhibits, at 20% of elongation in a direction parallel to the direction of orientation of the above fibres, a strain level lower than equal to 0.60 MPa measured according to ISO 9026 and ISO 37 standards by a specimen classified as "type 2" in said ISO 37 standard.

Preferably, said green elastomeric material reinforced with oriented fibres exhibits, at 20% of elongation in a direction parallel to the direction of orientation of the above fibres, a strain level higher than equal to 0.30 MPa measured according to ISO 9026 and ISO 37 standards by a specimen classified as "type 2" in said ISO 37 standard.

Preferably, said green elastomeric material reinforced with oriented fibres exhibits, at 20% of elongation in a direction parallel to the direction of orientation of the above fibres, a strain level lower than equal to 0.45 MPa measured according to ISO 9026 and ISO 37 standards by a specimen classified as "type 2" in said ISO 37 standard.

In a further preferred embodiment, said green elastomeric material reinforced with oriented fibres exhibits, at 50% of elongation in a direction parallel to the direction of orientation of the above fibres, a strain level higher than equal to 0.30 MPa measured according to ISO 9026 and ISO 37 standards by a specimen classified as "type 2" in said ISO 37 standard.

Preferably, said green elastomeric material reinforced with oriented fibres exhibits, at 50% of elongation in a direction parallel to the direction of orientation of the above fibres, a strain level lower than equal to 0.90 MPa measured according to ISO 9026 and ISO 37 standards by a specimen classified as "type 2" in said ISO 37 standard.

Even more preferably, said green elastomeric material reinforced with oriented fibres exhibits, at 50% of elongation in a direction parallel to the direction of orientation of the above fibres, a strain level higher than equal to 0.45 MPa measured according to ISO 9026 and ISO 37 standards by a specimen classified as "type 2" in said ISO 37 standard.

Even more preferably, said green elastomeric material reinforced with oriented fibres exhibits, at 50% of elongation in a direction parallel to the direction of orientation of the above fibres, a strain level lower than equal to 0.70 MPa measured according to ISO 9026 and ISO 37 standards by a specimen classified as "type 2" in said ISO 37 standard.

According to a preferred embodiment, said step a1) comprises the application of the constraining layer at least at the area that at the end of said step b) is comprised between the axially outer edges of the belt structure and the axially outermost portions of the carcass ply.

Preferably, said green elastomeric material comprises a cross-linkable unsaturated chain polymer base and wherein said oriented fibres are dispersed in said polymer base.

Even more preferably, said oriented fibres are oriented substantially perpendicular to the development of the strip-like elements forming said at least one carcass ply. This is possible in the case of tyres provided with a single carcass ply and, in that case, said orientation of the fibres is particularly advantageous to ensure evenness in the arrangement of the reinforcing cords present in said strip-like elements.

Preferably, said oriented fibres comprise fibrillated aramidic fibres in an amount higher than or equal to 0.5 phr.

Even more preferably, said oriented fibres comprise fibrillated aramidic fibres in an amount higher than or equal to 2 phr.

According to a further embodiment, said oriented fibres comprise fibrillated aramidic fibres dispersed in a polymeric matrix in an amount higher than or equal to 2.17 phr.

Preferably, said oriented fibres comprise fibrillated aramidic fibres dispersed in a polymeric matrix in an amount higher than or equal to 8.7 phr.

In a preferred embodiment, said step a1) of applying a constraining layer is carried out by winding a semi-finished product prepared and cut to size on said forming drum.

In a further preferred embodiment, said step a1) of applying a constraining layer is carried out by spiralling a continuous elongated element on said forming drum according to side by side or at least partially radially overlapped coils.

Preferably, said constraining layer is positioned at least at the area comprised between the axially outer edges of the belt structure and the axially outermost portions of the carcass ply.

Preferably, said green tyre further comprises a liner in a radially inner position relative to said at least one carcass ply.

Even more preferably, said green tyre further comprises an under-liner in a radially inner position relative to said at least one carcass ply and radially external to the liner.

According to one embodiment, said constraining layer is radially external relative to said at least one carcass ply.

According to a further embodiment, said constraining layer is radially internal relative to said at least one carcass ply.

Preferably, said constraining layer is radially internal relative to the liner.

Even more preferably, said constraining layer is radially interposed between the liner and the under-liner.

Even more preferably, said constraining layer is radially interposed between the under-liner and the carcass ply.

In a preferred embodiment, said green tyre is provided with a first and a second carcass ply, said constraining layer being radially interposed between the first and the second carcass ply.

Preferably, said liner comprises the constraining layer.

Even more preferably, said liner consists of said constraining layer.

Preferably, said under-liner comprises the constraining layer.

Even more preferably, said under-liner consists of said constraining layer.

Further features and advantages of the invention will appear more clearly from the following description of some preferred examples of processes for building a green tyre for vehicle wheels and tyres built by such processes according to the invention, made by way of an indicative non-limiting example with reference to the annexed drawings, wherein:
- figure 1 shows a section view of a green tyre according to a first embodiment of the invention built by the building process according to one embodiment of the invention;
- figure 2 shows an enlarged detail of figure 1;
- figure 3 shows a section view of a green tyre according to a second embodiment of the invention built by the building process according to one embodiment of the invention;
- figure 4 shows a section view of a green tyre according to a third embodiment of the invention built by the building process according to one embodiment of the invention;
- figure 5 shows a section view of a green tyre according to a fourth embodiment of the invention built by the building process according to one embodiment of the invention; and
- figure 6 shows a section view of a green tyre according to a fifth embodiment of the invention built by the building process according to one embodiment of the invention.

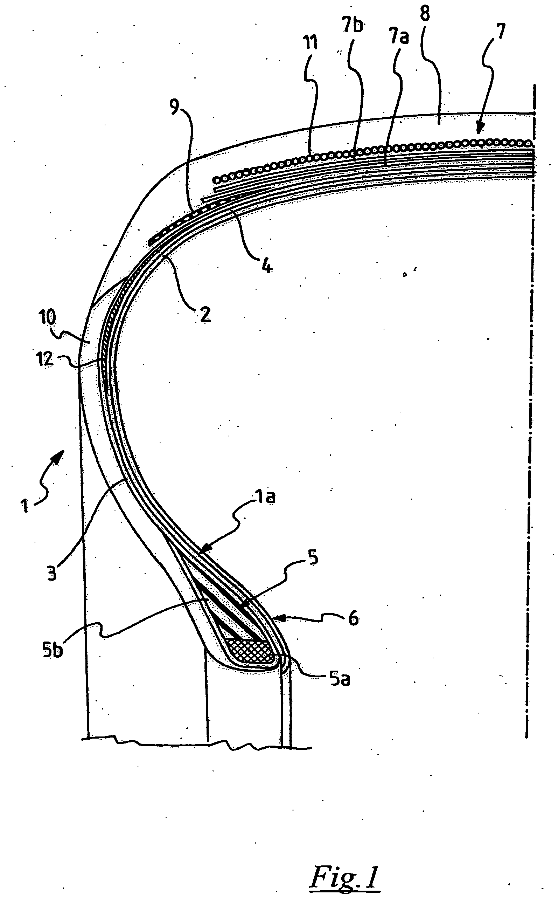

With reference to figure 1, reference numeral 1 globally indicates a green tyre for vehicle wheels built by the process of the invention.

The green tyre 1 comprises a carcass structure 1a which comprises a carcass ply 3 including a plurality of circumferentially contiguous strip-like elements and a pair of annular anchoring structures 5.

The latter constitute the reinforcement of the beads, that is, of the radially inner ends of the tyre, indicated, in figure 1 with reference numeral 6. Each annular anchoring structure 5 comprises at least one rim 5a and one filler 5b.

In figures 1-6 there is only one carcass ply, but the green tyre 1 may be built with multiple carcass plies.

The green tyre 1 further comprises a crown structure which comprises at least one belt structure 7 and a tread band 8. The belt structure 7 in turn preferably comprises two belt layers 7a, 7b, radially overlapped. Even more preferably, the belt structure 7 further comprises, in a radially outer position, also a third layer 11 of textile or metallic cords, arranged circumferentially (at 0 degrees).

Preferably, at the axial ends of the belt layers 7a and 7b there is an under-belt insert 9 and finally, in the axially outermost area of the green tyre 1, a sidewall 10.

According to the invention, the green tyre 1 further comprises at least one constraining layer 12 of a green elastomeric material reinforced with fibres oriented substantially perpendicular to the axis of rotation of the tyre itself in radially inner position relative to said belt structure 7. Said green elastomeric material reinforced with fibres exhibits at 20% of elongation in a direction parallel to the direction of orientation of the above fibres, a strain level higher than equal to 0.20 MPa measured according to ISO 9026 and ISO 37 standards by a specimen classified as "type 2" in said ISO 37 standard.

According to a preferred embodiments of the invention, said green elastomeric material reinforced with oriented fibres exhibits, at 20% of elongation in a direction parallel to the direction of orientation of the above fibres, a strain level lower than equal to 0.60 MPa measured according to ISO 9026 and ISO 37 standards by a specimen classified as "type 2" in said ISO 37 standard.

Even more preferably, said green elastomeric material reinforced with oriented fibres exhibits, at 20% of elongation in a direction parallel to the direction of orientation of the above fibres, a strain level higher than equal to 0.30 MPa and/or lower than or equal to 0.45 MPa when measured as indicated above.

According to some alternative embodiments of the invention, said green elastomeric material reinforced with oriented fibres exhibits, at 50% of elongation in a direction parallel to the direction of orientation of the above fibres, a strain level higher than equal to 0.30 MPa and/or lower than or equal to 0.90 MPa when measured as indicated above.

Preferably, said green elastomeric material reinforced with oriented fibres exhibits, at 50% of elongation in a direction parallel to the direction of orientation of the above fibres, a strain level higher than equal to 0.45 MPa and/or lower than or equal to 0.70 MPa when measured as indicated above.

The constraining layer 12 is positioned at least at the area comprised between the axially outer edges of the belt structure 7 and the axially outermost portions of the carcass ply 3, or where shown in the figures, in the tyre shoulder area. However, it may extend also from one bead 6 to the other of the green tyre 1.

According to preferred embodiments of the invention, shown in figures 1-5, the green tyre I further comprises a liner 2 in a radially inner position relative to said at least one carcass ply 3.

According to preferred embodiments shown in the same figures, besides liner 2, tyre 1 is further provided with an under-liner 4 in a radially inner position relative to said at least one carcass ply 3 and radially outer to liner 2. -

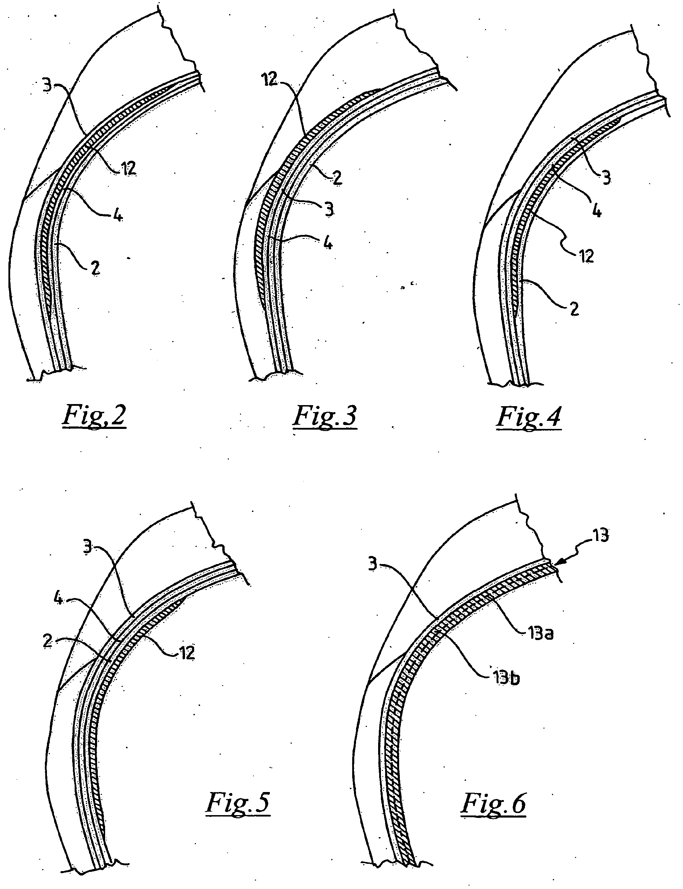

Figures 2 to 5 show four different embodiments of the green tyre 1 according to the invention. In all the embodiments illustrated in such figures, the green tyre 1 is provided with a liner 2, an under-liner 4, a ply 3 and a constraining layer 12, however the position of the constraining layer 12 is different in each embodiment.

In particular, in the first, third and fourth embodiment respectively shown in figures 2, 4 and 5, said constraining layer 12 is radially internal relative to said at least one carcass ply 3. On the other hand, in the second embodiment, shown in figure 3, said constraining layer 12 is radially external relative to said at least one carcass ply 3.

More in particular, in the first embodiment shown in figures 1 and 2, the constraining layer 12 is radially interposed between under-liner 4 and the carcass ply 3.

In the third embodiment shown in figure 4, the constraining layer 12 is radially interposed between liner 2 and the under-liner 4.

In the fourth embodiment shown in figure 5, the constraining layer 12 is radially internal relative to liner 2.

According to alternative embodiments of the invention not shown in the figures, the green tyre 1 is provided with a first and a second carcass ply 3 and the constraining layer 12 may also be radially interposed between the first and the second carcass ply 3, besides the positions illustrated before.

With reference to figure 6, it is visible that the green tyre 1 may have a different shape than that shown in the previous embodiments. In this fifth embodiment, in fact, the green tyre 1 is provided with a carcass ply 3 and with a layer 13 radially internal thereto.

Such layer 13, according to one embodiment, comprises a single liner layer comprising therein the constraining layer that may also replace the liner layer itself.

According to other embodiments, such layer 13 comprises two radially overlapped layers, liner 13a and under-liner 13b. In this case, the constraining layer may be comprised within one of said layers 13a and 13b or replace one thereof.

According to a preferred embodiment of the invention, the green elastomeric material reinforced with oriented fibres of the constraining layer comprises a cross-linkable unsaturated chain polymer base wherein reinforcing fibres are dispersed.

Such oriented fibres are oriented substantially perpendicular to the development of the strip-like elements forming said at least one carcass ply 3 and preferably comprise fibrillated aramidic fibres.

The above fibrillated aramidic fibres preferably exhibit a diameter comprised between 5 µm and 15 µm, with a length comprised between 50 µm and 500 µm.

Preferably, the amount of said fibrillated aramidic fibres is higher than or equal to 0.5 parts by weight per 100 parts by weight of polymer base (phr). More preferably, the amount of said fibrillated aramidic fibres is higher than or equal to 2 phr.

The fibrillated aramidic fibres are dispersed in a polymer matrix. For example, it is possible to use Kevlar ® Engineered Elastomers 1F722 marketed by Dupont that contains 23% fibrillated aramidic fibres and 77% natural rubber.

In that case, said fibrillated aramidic fibres are dispersed in a polymeric matrix in an amount higher than or equal to 2.17 phr.

More preferably, said fibrillated aramidic fibres are dispersed in a polymeric matrix in an amount higher than or equal to 8.7 phr.

From the moulding and vulcanization of a green tyre 1 as described above it is possible to obtain a tyre with particular features of structural regularity, as explained above.

A process for building a green tyre 1 for vehicle wheels according to the present invention shall now be described.

According to a first step a), said process comprises building a carcass structure 1a of a green tyre 1 on a forming drum, said carcass structure 1a comprising at least one carcass ply 3 and a pair of annular anchoring structures 5, said at least one carcass ply 3 being built by laying circumferentially contiguous strip-like elements.

Subsequently, the process according to the invention provides for a step b) of toroidally shaping said carcass structure 1a for associating it to a crown structure comprising at least one belt structure 7.

The above building step a) according to the invention comprises at least one step a1) of applying a constraining layer 12 of a green elastomeric material reinforced with fibres oriented substantially perpendicular to the axis of rotation of said forming drum, said green elastomeric material reinforced with oriented fibres exhibiting at 20% of elongation in a direction parallel to the direction of orientation of the above fibres, a strain level higher than equal to 0.20 MPa measured according to ISO 9026 and ISO 37 standards by a specimen classified as "type 2" in said ISO 37 standard.

The forming drum is preferably substantially cylindrical and the step b) of shaping is carried out by radial expansion of the forming drum.

According to preferred embodiments of the building process, the step a1) comprises the application of the constraining layer 12 at least at the area that at the end of the shaping step is comprised between the axially outer edges of the belt structure 7 and the axially outermost portions of the carcass ply 3, that is, where shown in figures 1-5.

According to a preferred embodiment, the application of the above constraining layer 12 can be performed by winding a semi-finished product prepared and cut to size, winding it on said forming drum, either directly thereon or on top of one or more components already laid in advance (such as, for example, liner, under-liner, first carcass ply, etc.).

According to a further, more preferred embodiment, the winding of the constraining layer 12 may be carried out by spiralling a continuous elongated element by side by side or at least partially radially overlapped coils for forming said constraining layer 12. In that case, said continuous elongated element may also be produced at the time of use by extrusion.

Preferably, the oriented fibres are oriented substantially perpendicular to the development of the strip-like elements forming said at least one carcass ply.

Having the described building process followed by a moulding and vulcanization step, a tyre building process for vehicle wheels is obtained which is free from the above faults.

## Claims

1. Process for building a green tyre (1) for vehicle wheels comprising the steps of:
a) building a carcass structure (1a) of a green tyre on a forming drum, said carcass structure (1a) comprising at least one carcass ply (3) and a pair of annular anchoring structures (5), said at least one carcass ply (3) being built by laying circumferentially contiguous strip-like elements;
b) toroidally shaping said carcass structure (1a) for associating it to a crown structure comprising at least one belt structure (7);
**characterized in that** the step a) of building comprises at least one step a1) of applying a constraining layer (12) of a green elastomeric material reinforced with fibres circumferentially oriented, said green elastomeric material reinforced with oriented fibres exhibiting at 20% of elongation in a direction parallel to the direction of orientation of the above fibres, a strain level higher than or equal to 0.20 MPa measured according to ISO 9026 and ISO 37 standards by a specimen classified as "type 2" in said ISO 37 standard.

2. Process for building a green tyre (1) for vehicle wheels according to claim 1, wherein the step b) of shaping is carried out by radial expansion of the forming drum.

3. Process for building a green tyre (1) for vehicle wheels according to any one of the previous claims, wherein said green elastomeric material reinforced with oriented fibres exhibits, at 20% of elongation in a direction parallel to the direction of orientation of the above fibres, a strain level lower than or equal to 0.60 MPa measured according to ISO 9026 and ISO 37 standards by a specimen classified as "type 2" in said ISO 37 standard.

4. Process for building a green tyre (1) for vehicle wheels according to claim 1, wherein said green elastomeric material reinforced with oriented fibres exhibits, at 20% of elongation in a direction parallel to the direction of orientation of the above fibres, a strain level higher than or equal to 0.30 MPa measured according to ISO 9026 and ISO 37 standards by a specimen classified as "type 2" in said ISO 37 standard.

5. Process for building a green tyre (1) for vehicle wheels according to claim 3 or 4, wherein said green elastomeric material reinforced with oriented fibres exhibits, at 20% of elongation in a direction parallel to the direction of orientation of the above fibres, a strain level lower than or equal to 0.45 MPa measured according to ISO 9026 and ISO 37 standards by a specimen classified as "type 2" in said ISO 37 standard.

6. Process for building a green tyre (1) for vehicle wheels according to any one of the previous claims, wherein said green elastomeric material reinforced with oriented fibres exhibits, at 50% of elongation in a direction parallel to the direction of orientation of the above fibres, a strain level higher than or equal to 0.30 MPa measured according to ISO 9026 and ISO 37 standards by a specimen classified as "type 2" in said ISO 37 standard, and a strain level lower than or equal to 0.90 MPa measured according to ISO 9026 and ISO 37 standards by a specimen classified as "type 2" in said ISO 37 standard.

7. Process for building a green tyre (1) for vehicle wheels according to claim 6, wherein said green elastomeric material reinforced with oriented fibres exhibits, at 50% of elongation in a direction parallel to the direction of orientation of the above fibres, a strain level higher than or equal to 0.45 MPa measured according to ISO 9026 and ISO 37 standards by a specimen classified as "type 2" in said ISO 37 standard, and a strain level lower than or equal to 0.70 MPa measured according to ISO 9026 and ISO 37 standards by a specimen classified as "type 2" in said ISO 37 standard.

8. Process for building a green tyre (1) for vehicle wheels according to any one of the previous claims, wherein step a1) comprises the application of the constraining layer (12) at least at the area that at the end of said step b) is comprised between the axially outer edges of the belt structure (7) and the axially outermost portions of the carcass ply (3).

9. Process for building a green tyre (1) for vehicle wheels according to one or more of the previous claims, wherein said step a1) of applying a constraining layer (12) is carried out by winding a semi-finished product prepared and cut to size on said forming drum.

10. Process for building a green tyre (1) for vehicle wheels according to one or more of claims 1 - 8, wherein said step a1) of applying a constraining layer (12) is carried out by spiralling a continuous elongated element on said forming drum according to side by side or at least partially radially overlapped coils.

11. Process for producing a tyre for vehicle wheels comprising the step of building a green tyre (1) according to the process according to any of claims 1 to 10, and the step of moulding and vulcanizing said green tyre (1).

12. Green tyre (1) for vehicle wheels comprising:
- a carcass structure (1a) comprising at least one carcass ply (3) including a plurality of circumferentially contiguous strip-like elements and a pair of annular anchoring structures (5); and
- a crown structure comprising at least one belt structure (7) and a tread band (8);
**characterized in that** it also comprises at least one constraining layer (12) of a green elastomeric material reinforced with fibres circumferentially oriented in radially inner position relative to said belt structure (7), said green elastomeric material reinforced with fibres exhibiting at 20% of elongation in a direction parallel to the direction of orientation of the above fibres, a strain level higher than or equal to 0.20 MPa measured according to ISO 9026 and ISO 37 standards by a specimen classified as "type 2" in said ISO 37 standard.

13. Green tyre (1) for vehicle wheels according to claim 12, further comprising a liner (2) in a radially inner position relative to said at least one carcass ply (3).

14. Green tyre (1) for vehicle wheels according to claim 13, further comprising an under-liner (4) in a radially inner position relative to said at least one carcass ply (3) and radially outer to the liner (2).

15. Green tyre (1) for vehicle wheels according to any one of claims 12 - 14, wherein said constraining layer (12) is radially external relative to said at least one carcass ply (3).

16. Green tyre (1) for vehicle wheels according to any one of claims 12 - 14, wherein said constraining layer (12) is radially internal relative to said at least one carcass ply (3).

17. Green tyre (1) for vehicle wheels according to claim 16, when depending on claim 13 or 14, wherein said constraining layer (12) is radially internal relative to the liner (2).

18. Green tyre (1) for vehicle wheels according to claim 16, when depending on claim 14, wherein said constraining layer (12) is radially interposed between the liner (2) and the under-liner (4).

19. Green tyre (1) for vehicle wheels according to claim 16, when depending on claim 13, wherein said constraining layer (12) is radially interposed between the under-liner (4) and the carcass ply (3).

20. Green tyre (1) for vehicle wheels according to any one of claims 12 - 14, provided with a first and a second carcass ply (3), said constraining layer (12) being radially interposed between the first and the second carcass ply (3).

21. Green tyre (1) for vehicle wheels according to claim 16, when depending on claim 13 or 14, wherein the liner (2) comprises the constraining layer (12).

22. Green tyre (1) for vehicle wheels according to claim 16, when depending on claim 14, wherein the under-liner (4) comprises the constraining layer (12).

23. Green tyre (1) for vehicle wheels according to one of claims 12 - 22, wherein the green elastomeric material reinforced with oriented fibres comprises a cross-linkable unsaturated chain polymer base wherein said reinforcing fibres are dispersed.

24. Green tyre (1) for vehicle wheels according to claim 23, wherein said oriented fibres comprise fibrillated aramidic fibres in an amount higher than or equal to 0.5 parts by weight per 100 parts by weight of polymer base.

25. Green tyre (1) for vehicle wheels according to claim 23, wherein the oriented fibres are fibrillated aramidic fibres dispersed in a polymeric matrix in an amount higher than or equal to 2.17 parts by weight per 100 parts by weight of polymer.

## Patentansprüche

1. Verfahren zum Herstellen eines rohen Reifens (1) für Fahrzeugräder mit den Schritten des:
a) Herstellens einer Karkassenstruktur (1a) eines rohen Reifens auf einer Formungstrommel, wobei die Karkassenstruktur (1a) wenigstens eine Karkassenlage (3) und ein Paar ringförmiger Verankerungsstrukturen (5) aufweist, wobei die wenigstens eine Karkassenlage (3) durch Auflegen entlang des Umfangs zusammenhängender streifenähnlicher Elemente hergestellt wird,
b) ringförmigen Ausformens der Karkassenstruktur (1a), um diese einer Zenitstruktur zuzuordnen, die wenigstens eine Gürtelstruktur (7) aufweist,
**dadurch gekennzeichnet, dass** der Schritt a) des Herstellens wenigstens einen Schritt a1) des Aufbringens einer Beschränkungsschicht (12) eines Elastomerrohmaterials, das mit umfänglich orientierten Fasern verstärkt ist, aufweist, wobei das Elastomerrohmaterial, das mit ausgerichteten Fasern verstärkt ist, wenigstens eine Dehnung von 20% in einer Richtung parallel zu der Ausrichtungsrichtung der oben genannten Fasern aufweist, gemessen bei einem Spannungsniveau größer oder gleich 0,20 MPa nach den ISO 9026 und ISO 37 Normen an einer Probe, die als "Typ 2" in der ISO 37 Norm klassifiziert ist.

2. Verfahren zum Herstellen eines rohen Reifens (1) für Fahrzeugräder nach Anspruch 1, bei dem Schritt b) des Ausformens durch eine radiale Ausdehnung der Formungstrommel ausgeführt wird.

3. Verfahren zum Herstellen eines rohen Reifens (1) für Fahrzeugräder nach einem der vorhergehenden Ansprüche, bei dem das Elastomerrohmaterial, das mit ausgerichteten Fasern verstärkt ist, bei 20% Ausdehnung in einer Richtung parallel zu der Ausrichtungsrichtung der obigen Fasern ein Spannungsniveau kleiner oder gleich 0,60 MPa aufweist, gemessen nach den ISO 9026 und ISO 37 Normen an einer Probe, die als "Typ 2" in der ISO 37 Norm klassifiziert ist.

4. Verfahren zum Herstellen eines rohen Reifens (1) für Fahrzeugräder nach Anspruch 1, bei dem das Elastomerrohmaterial, das mit ausgerichteten Fasern verstärkt ist, bei 20% Ausdehnung in einer Richtung parallel zu der Ausrichtungsrichtung der obigen Fasern ein Spannungsniveau größer oder gleich 0,30 MPa aufweist, gemessen nach den ISO 9026 und ISO 37 Normen an einer Probe, die als "Typ 2" in der ISO 37 Norm klassifiziert ist.

5. Verfahren zum Herstellen eines rohen Reifens (1) für Fahrzeugräder nach Anspruch 3 oder 4, bei dem das Elastomerrohmaterial, das mit ausgerichteten Fasern verstärkt ist, bei 20% Ausdehnung in einer Richtung parallel zu der Ausrichtungsrichtung der obigen Fasern ein Spannungsniveau kleiner oder gleich 0,45 MPa aufweist, gemessen nach den ISO 9026 und ISO 37 Normen an einer Probe, die als "Typ 2" in der ISO 37 Norm klassifiziert ist.

6. Verfahren zum Herstellen eines rohen Reifens (1) für Fahrzeugräder nach einem der vorhergehenden Ansprüche, bei dem das Elastomerrohmaterial, das mit ausgerichteten Fasern verstärkt ist, bei 50% Ausdehnung in einer Richtung parallel zu der Ausrichtungsrichtung der obigen Fasern ein Spannungsniveau größer oder gleich 0,30 MPa, das nach den ISO 9026 und ISO 37 Normen an einer Probe gemessen wurde, die als "Typ 2" in der ISO 37 Norm klassifiziert ist, und ein Spannungsniveau kleiner oder gleich 0,90 MPa aufweist, welches nach den ISO 9026 und ISO 37 Normen an einer Probe gemessen wurde, die als "Typ 2" in der ISO 37 Norm klassifiziert ist.

7. Verfahren zum Herstellen eines rohen Reifens (1) für Fahrzeugräder nach Anspruch 6, bei dem das Elastomerrohmaterial, das mit ausgerichteten Fasern verstärkt ist, bei 50% Ausdehnung in einer Richtung parallel zu der Ausrichtungsrichtung der obigen Fasern ein Spannungsniveau größer oder gleich 0,45 MPa, das nach den ISO 9026 und ISO 37 Normen an einer Probe gemessen wurde, die als "Typ 2" in der ISO 37 Norm klassifiziert ist, und ein Spannungsniveau kleiner oder gleich 0,70 MPa aufweist, welches nach den ISO 9026 und ISO 37 Normen an einer Probe gemessen wurde, die als "Typ 2" in der ISO 37 Norm klassifiziert ist.

8. Verfahren zum Herstellen eines rohen Reifens (1) für Fahrzeugräder nach einem der vorhergehenden Ansprüche, bei dem Schritt a1) das Aufbringen der Beschränkungsschicht (12) wenigstens an der Fläche aufweist, die am Ende von Schritt b) zwischen den axial äußeren Kanten der Gürtelstruktur (7) und den axial äußersten Abschnitten der Karkassenlage (3) eingefasst ist.

9. Verfahren zum Herstellen eines rohen Reifens (1) für Fahrzeugräder nach einem oder mehreren der vorhergehenden Ansprüche, bei dem Schritt a1) des Aufbringens einer Beschränkungsschicht (12) durch Wickeln eines Zwischenprodukts durchgeführt wird, welches auf der Formungstrommel vorbereitet und passend zugeschnitten wird.

10. Verfahren zum Herstellen eines rohen Reifens (1) für Fahrzeugräder nach einem der Ansprüche 1 bis 8, bei dem Schritt a1) des Aufbringens einer Beschränkungsschicht (12) durch Aufbringen in Spiralform von einem kontinuierlichen länglichen Element auf die Formungstrommel gemäß nebeneinander liegenden oder wenigstens teilweise radial überlappenden Windungen durchgeführt wird.

11. Verfahren zum Herstellen eines Reifens (1) für Fahrzeugräder mit dem Schritt des Herstellens eines rohen Reifens (1) gemäß dem Verfahren nach einem der Ansprüche 1 bis 10 und dem Schritt des Pressformens und Vulkanisierens des rohen Reifens (1).

12. Roher Reifen (1) für Fahrzeugräder mit:
- einer Karkassenstruktur (1) mit wenigstens einer Karkassenlage (3) mit mehreren umfänglich zusammenhängenden streifenähnlichen Elementen und einem Paar ringförmiger Verankerungsstrukturen (5) und
- einer Zenitstruktur mit wenigstens einer Gürtelstruktur (7) und einem Laufflächenband (8),
**dadurch gekennzeichnet, dass** dieser auch wenigstens eine Beschränkungsschicht (12) aus einem Elastomerrohmaterial, das mit Fasern verstärkt ist, die umfänglich an einer radial inneren Position in Bezug auf die Gürtelstruktur (7) ausgerichtet sind, aufweist, wobei das Elastomerrohmaterial, das mit Fasern verstärkt ist, bei 20% Ausdehnung in einer Richtung parallel zu der Ausrichtungsrichtung der obigen Fasern ein Spannungsniveau größer oder gleich 0,20 MPa aufweist, welches gemäß den ISO 9026 und ISO 37 Normen an einer Probe gemessen wird, die als "Typ 2" in der ISO 37 Norm klassifiziert ist.

13. Roher Reifen (1) für Fahrzeugräder nach Anspruch 12, ferner mit einer Auskleidung (2) an einer radial inneren Position in Bezug auf die wenigstens eine Karkassenlage (3).

14. Roher Reifen (1) für Fahrzeugräder nach Anspruch 13, ferner mit einer Unterauskleidung (4) an einer radial inneren Position in Bezug auf die wenigstens eine Karkassenlage (3) und radial außerhalb der Auskleidung (2).

15. Roher Reifen (1) für Fahrzeugräder nach einem der Ansprüche 12 bis 14, bei dem die Beschrankungsschicht (12) radial außerhalb der wenigstens einen Karkassenlage (3) ist.

16. Roher Reifen (1) für Fahrzeugräder nach einem der Ansprüche 12 bis 14, bei dem die Beschränkungsschicht (12) radial innerhalb der wenigstens einen Karkassenlage (3) ist.

17. Roher Reifen (1) für Fahrzeugräder nach Anspruch 16, sofern von Anspruch 13 oder 14 abhängig, bei dem die Beschränkungsschicht (12) radial innerhalb der Auskleidung (2) ist.

18. Roher Reifen (1) für Fahrzeugräder nach Anspruch 16, sofern von Anspruch 14 abhängig, bei dem die Beschrankungsschicht (12) radial zwischen der Auskleidung (2) und der Unterauskleidung (4) liegt.

19. Roher Reifen (1) für Fahrzeugräder nach einem der Ansprüche 16, sofern von Anspruch 13 abhängig, bei dem die Beschränkungsschicht (12) radial zwischen der Unterauskleidung (4) und der Karkassenlage (3) liegt.

20. Roher Reifen (1) für Fahrzeugräder nach einem der Ansprüche 12 bis 14, mit einer ersten und einer zweiten Karkassenlage (3), wobei die Beschränkungsschicht (12) radial zwischen der ersten und der zweiten Karkassenlage (3) liegt.

21. Roher Reifen (1) für Fahrzeugräder nach Anspruch 16, sofern von Anspruch 13 oder 14 abhängig, bei dem die Auskleidung (2) die Beschränkungsschicht (12) aufweist.

22. Roher Reifen (1) für Fahrzeugräder nach Anspruch 16, sofern von Anspruch 14 abhängig, bei dem die unterauskleidung (4) die Beschränkungsschicht (12) aufweist.

23. Roher Reifen (1) für Fahrzeugräder nach einem der Ansprüche 12 bis 22, bei dem das Elastomerrohmaterial, das mit ausgerichteten Fasern verstärkt ist, ein vernetzbares ungesättigtes Polymerkettenausgangsmaterial aufweist, in dem die Verstärkungsfasern verteilt sind.

24. Roher Reifen (1) für Fahrzeugräder nach Anspruch 23, bei dem die ausgerichteten Fasern zerfaserte Aramidfasern in einer Menge von größer oder gleich 0,5 Gewichtsteile pro 100 Gewichtsteile Polymerausgangsmazerial aufweisen.

25. Roher Reifen (1) für Fahrzeugräder nach Anspruch 23, bei dem die ausgerichteten Fasern zerfaserte Aramidfasern sind, die in einer Polymermatrix in einer Menge von größer oder gleich 2,17 Gewichtsteile pro 100 Gewichtsteile Polymerausgangsmaterial verteilt sind.

## Revendications

1. Procédé de construction d'un pneu vert (1) pour roues de véhicules comprenant les étapes de :
a) construction d'une structure de carcasse (1a) d'un pneu vert sur un tambour de formage, ladite structure de carcasse (1a) comprenant au moins une nappe de carcasse (3) et une paire de structures d'ancrage annulaire (5), ladite au moins une nappe de carcasse (3) étant construite par pose d'éléments en forme de bande circonférentiellement contigus ;
b) mise en forme toroïdale de ladite structure de carcasse (1a) pour l'associer à une structure de couronne comprenant au moins une structure de ceinture (7) ;
**caractérisé en ce que** l'étape a) de construction comprend au moins une étape a1) d'application d'une couche de contrainte (12) d'un matériau élastomère vert renforcé de fibres orientées circonférentiellement, ledit matériau élastomère vert renforcé de fibres orientées présentant à 20% d'élongation dans une direction parallèle à la direction d'orientation des fibres ci-dessus, un niveau de contrainte supérieur ou égal à 0,20 MPa mesuré selon les normes ISO 9026 et ISO 37 par un spécimen classé comme étant de « type 2 » dans ladite norme ISO 37.

2. Procédé de construction d'un pneu vert (1) pour roues de véhicules selon la revendication 1, dans lequel l'étape b) de mise en forme est réalisée par expansion radiale du tambour de formage.

3. Procédé de construction d'un pneu vert (1) pour roues de véhicules selon l'une quelconque des revendications précédentes, dans lequel ledit matériau élastomère vert renforcé de fibres orientées présente, à 20% d'élongation dans une direction parallèle à la direction d'orientation des fibres ci-dessus, un niveau de contrainte inférieur ou égal à 0,60 MPa mesuré selon les normes ISO 9026 et ISO 37 par un spécimen classé comme étant de « type 2 » dans ladite norme ISO 37.

4. Procédé de construction d'un pneu vert (1) pour roues de véhicules selon la revendication 1, dans lequel dans lequel ledit matériau élastomère vert renforcé de fibres orientées présente, à 20% d'élongation dans une direction parallèle à la direction d'orientation des fibres ci-dessus, un niveau de contrainte supérieur ou égal à 0,30 MPa mesuré selon les normes ISO 9026 et ISO 37 par un spécimen classé comme étant de « type 2 » dans ladite norme ISO 37.

5. Procédé de construction d'un pneu vert (1) pour roues de véhicules selon la revendication 3 ou 4, dans lequel ledit matériau élastomère vert renforcé de fibres orientées présente, à 20% d'élongation dans une direction parallèle à la direction d'orientation des fibres ci-dessus, un niveau de contrainte inférieur ou égal à 0,45 MPa mesuré selon les normes ISO 9026 et ISO 37 par un spécimen classé comme étant de « type 2 » dans ladite norme ISO 37.

6. Procédé de construction d'un pneu vert (1) pour roues de véhicules selon l'une quelconque des revendications précédentes, dans lequel dans lequel ledit matériau élastomère vert renforcé de fibres orientées présente, à 50% d'élongation dans une direction parallèle à la direction d'orientation des fibres ci-dessus, un niveau de contrainte supérieur ou égal à 0,30 MPa mesuré selon les normes ISO 9026 et ISO 37 par un spécimen classé comme étant de « type 2 » dans ladite norme ISO 37, et un niveau de contrainte inférieur ou égal à 0,90 MPa mesuré selon les normes ISO 9026 et ISO 37 par un spécimen classé comme étant de « type 2 » dans ladite norme ISO 37.

7. Procédé de construction d'un pneu vert (1) pour roues de véhicules selon la revendication 6, dans lequel ledit matériau élastomère vert renforcé de fibres orientées présente, à 50% d'élongation dans une direction parallèle à la direction d'orientation des fibres ci-dessus, un niveau de contrainte supérieur ou égal à 0,45 MPa mesuré selon les normes ISO 9026 et ISO 37 par un spécimen classé comme étant de « type 2 » dans ladite norme ISO 37, et un niveau de contrainte inférieur ou égal à 0,70 MPa mesuré selon les normes ISO 9026 et ISO 37 par un spécimen classé comme étant de « type 2 » dans ladite norme ISO 37.

8. Procédé de construction d'un pneu vert (1) pour roues de véhicules selon l'une quelconque des revendications précédentes, dans lequel l'étape a1) comprend l'application d'une couche de contrainte (12) au moins sur la région qui à la fin de ladite étape b) est comprise entre les bords axialement externes de la structure de ceinture (7) et les parties axialement les plus externes de la nappe de carcasse (3).

9. Procédé de construction d'un pneu vert (1) pour roues de véhicules selon l'une ou plusieurs des revendications précédentes, dans lequel ladite étape a1) d'application d'une couche de contrainte (12) est réalisée par enroulement d'un produit semi-fini préparé et découpé à la dimension sur ledit tambour de formage.

10. Procédé de construction d'un pneu vert (1) pour roues de véhicules selon l'une ou plusieurs des revendications 1-8, dans lequel ladite étape a1) d'application d'une couche de contrainte (12) est réalisée par enroulement spiralé d'un élément allongé continu sur ledit tambour de formage selon des spires côte à côte ou au moins partiellement en recouvrement radial.

11. Procédé de construction d'un pneu vert pour roues de véhicules comprenant l'étape de construction d'un pneu vert (1) selon le procédé selon l'une quelconque des revendications 1 à 10, et l'étape de moulage et vulcanisation dudit pneu vert (1).

12. Pneu vert (1) pour roues de véhicules comprenant :
• une structure de carcasse (1a) comprenant au moins une nappe de carcasse (3) incluant une pluralité d'éléments en forme de bande circonférentiellement contigus et une paire de structures d'ancrage annulaire (5) ; et
• une structure de couronne comprenant au moins une structure de
ceinture (7) et une bande de roulement (8) ;
**caractérisé en ce qu'**il comprend en outre au moins une couche de contrainte (12) d'un matériau élastomère vert renforcé de fibres orientées circonférentiellement dans une position radialement Interne par rapport à ladite structure de ceinture (7), ledit matériau élastomère vert renforcé de fibres présentant à 20% d'élongation dans une direction parallèle à la direction d'orientation des fibres ci-dessus, un niveau de contrainte supérieur ou égal à 0,20 MPa mesuré selon les normes ISO 9026 et ISO 37 par un spécimen classé comme étant de « type 2 » dans ladite norme ISO 37.

13. Pneu vert (1) pour roues de véhicules selon la revendication 12, comprenant en outre une chemise (2) en une position radialement interne par rapport à ladite au moins une nappe de carcasse (3).

14. Pneu vert (1) pour roues de véhicules selon la revendication 13, comprenant en outre un sous-chemise (4) en une position radialement interne par rapport à ladite au moins une nappe de carcasse (3) et radialement externe par rapport à la chemise (2).

15. Pneu vert (1) pour roues de véhicules selon l'une quelconque des revendications 12-14, dans lequel ladite chemise de contrainte (12) est radialement externe par rapport à ladite au moins une nappe de carcasse (3).

16. Pneu vert (1) pour roues de véhicules selon l'une quelconque des revendications 12-14, dans lequel ladite couche de contrainte (12) est radialement interne par rapport à ladite au moins une nappe de carcasse (3).

17. Pneu vert (1) pour roues de véhicules selon la revendication 16, lorsque dépendante de la 13 ou 14, dans lequel ladite couche de contrainte (12) est radialement interne par rapport à la chemise (2).

18. Pneu vert (1) pour roues de véhicules selon la revendication 16, lorsque dépendante de la revendication 14, dans lequel ladite couche de contrainte (12) est radialement interposée entre la chemise (2) et la sous-chemise (4).

19. Pneu vert (1) pour roues de véhicules selon la revendication 16, lorsque dépendante de la revendication 13, dans lequel ladite couche de contrainte (12) est radialement interposée entre la sous-chemise (4) et la nappe de carcasse (3).

20. Pneu vert (1) pour roues de véhicules selon l'une quelconque des revendications 12-14, pourvu d'une première et deuxième nappe de carcasse (3), ladite couche de contrainte (12) étant radialement interposée entre la première et la seconde nappe de carcasse (3).

21. Pneu vert (1) pour roues de véhicules selon la revendication 16, lorsque dépendante de la revendication 13 ou 14, dans lequel la couche (2) comprend la chemise de contrainte (12).

22. Pneu vert (1) pour roues de véhicules selon la revendication 16, lorsque dépendante de la revendication 14, dans lequel la sous-chemise (4) comprend la couche de contrainte (12).

23. Pneu vert (1) pour roues de véhicules selon l'une quelconque des revendications 12-22, dans lequel le matériau élastomère vert renforcé de fibres orientées comprend une base polymère de chaîne insaturée réticulable dans lequel lesdites fibres de renforcement sont dispersées.

24. Pneu vert (1) pour roues de véhicules selon la revendication 23, dans lequel lesdites fibres orientées comprennent des fibres d'aramide fibrillées dans une proportion supérieure ou égale à 0,5 parties en poids par 100 parties en poids de base polymère.

25. Pneu vert (1) pour roues de véhicules selon la revendication 23, dans lequel lesdites fibres orientées sont des fibres d'aramide fibrillées dispersées dans une matrice polymère dans une proportion supérieure ou égale à 2,17 parties en poids par 100 parties en poids de polymère.
